# EUROPEAN PATENT SPECIFICATION

(11) **EP 0 997 113 B1**
(45) Date of publication and mention of the grant of the patent: **29.12.2004**
(21) Application number: 99121592.2
(22) Date of filing: 29.10.1999
(51) Int. Cl.: A61C 13/12, B24B 41/04

(54) **Oscillating electric lathe for prosthodontics**
Schwingende elektrische Drehmaschine für die Prosthodontie
Tour électrique oscillant utilisé en prosthodontie

(30) Priority: 30.10.1998 JP 31020498
(43) Date of publication of application: 03.05.2000
(73) Proprietor: KABUSHIKI KAISHA MORITA TOKYO SEISAKUSHO, Yono-shi, Saitama 338-0001 (JP)
(72) Inventor: Terasawa, Junji, c/oK.K.MORITA TOKYO SEISAKUSHO, Yono-shi, Saitama 338-0001 (JP); Michino, Yoshikazu, c/oK.K.MORITA TOKYO SEISAKUSHO, Yono-shi, Saitama 338-0001 (JP)
(74) Representative: VOSSIUS & PARTNER

(56) References cited:
- EP-A- 0 436 837
- DE-A- 3 716 413
- DE-U- 8 703 394
- DE-U- 8 904 194

## Description

The present invention relates to electric lathes for grinding or polishing resins or various metal prostheses in prosthodontics. More particularly, the present invention relates to an oscillating electric lathe in which a shaft that rotates with an abrasive material or the like held thereon oscillates.

conventionally, see for instance document EP-A-0 436 837, the axis of a rotating shaft of an electric lathe that holds an abrasive material, e.g. a grindstone, is fixed. Therefore, during polishing, contact between the abrasive material and an object to be polished remains in the same place. Consequently, loading of the abrasive material, e.g. the grindstone, occurs and it is difficult to uniformly finish the surface to be polished. Thus, the efficiency is unfavorably low. Moreover, the object being polished is likely to be pulled in, and the amount of heat generated during polishing is large.

In view of the above-described problems with the prior art, an object of the present invention is to provide an oscillating electric lathe wherein loading of the abrasive material is reduced, and which is capable of uniformly finishing an object to be polished as far as small parts thereof, and wherein the object being polished is unlikely to be pulled in, and the amount of heat generated during polishing is reduced.

The present invention is applied to an electric lathe for grinding or polishing resins or various metal prostheses in prosthodontics.

According to the present invention, there is provided an oscillating electric lathe for prosthodontics which includes a rotating shaft provided on one side and an oscillating shaft provided on the other side. The rotating shaft and the oscillating shaft are disposed in a straight line through a coupling mechanism. The rotating shaft has a disc-shaped rotation-side joint secured to the proximal end thereof. The rotation-side joint has an inverted U-shaped projection or a U-shaped groove which extends diametrically and has a predetermined width. The oscillating shaft has an oscillation-side joint secured to the proximal end thereof. The oscillation-side joint is symmetrical with the rotation-side joint and displaced 90 degrees with respect to the rotation-side joint. A disc-shaped cross oscillating member is positioned between the rotation-side joint and the oscillation-side joint to fit to and slide on the two joints. The cross oscillating member has U-shaped grooves or inverted U-shaped projections provided diametrically on the obverse and reverse sides thereof at respective positions 90 degrees separate from each other. The U-shaped grooves or inverted U-shaped projections each have a predetermined width corresponding to the inverted U-shaped projection or U-shaped groove of each of the joints. The oscillating shaft is decentered with respect to the axis of the rotating shaft. The oscillating electric lathe further includes an eccentric collar for rotatably supporting the oscillating shaft. The eccentric collar has a wall thickness varied so that the axis of the inner periphery and the axis of the outer periphery are displaced with respect to each other. An oscillator housing is provided around the outer periphery of the eccentric collar. The oscillator housing has the same axis as that of the rotating shaft and rotatably supports the eccentric collar. The oscillating electric lathe further includes a motor for rotating the rotating shaft and the eccentric collar, and a rotatively driving part for the rotating shaft and the eccentric collar. The rotatively driving part is capable of adjusting the number of revolutions of the motor.

Preferably, the rotatively driving part for the rotating shaft and the eccentric collar has a single motor as a driving source. The motor has shafts projecting therefrom rightward and leftward. The rotatively driving part includes a rotating shaft driving part having a pulley for rotation fitted on one of the shafts of the motor and a rotating shaft rotating pulley secured to the rotating shaft. A belt is stretched between the pulleys through a roller. The rotatively driving part further includes an eccentric collar driving part having a pulley for rotation fitted on the other shaft of the motor and an eccentric collar rotating pulley fitted on the outer periphery of an end portion of the eccentric collar rotatably supporting the oscillating shaft. The eccentric collar rotating pulley has a smaller diameter than that of the rotating shaft rotating pulley. A belt is stretched between the pulleys.

Alternatively, the rotatively driving part for the rotating shaft and the eccentric collar has a plurality of motors as driving sources. The motors have shafts projecting therefrom. The rotatively driving part includes a rotating shaft driving part having a pulley for rotation fitted on the shaft of one of the motors and a rotating shaft rotating pulley secured to the rotating shaft. A belt is stretched between the pulleys through a roller. The rotatively driving part further includes an eccentric collar driving part having a pulley for rotation fitted on the shaft of another of the motors and an eccentric collar rotating pulley fitted on the outer periphery of an end portion of the eccentric collar rotatably supporting the oscillating shaft. A belt is stretched between the pulleys.

Preferably, the rotational speed of the motor for rotating the eccentric collar is changed by replacing the pulley fitted on the outer periphery of the end portion of the eccentric collar with a pulley for rotation with a larger or smaller diameter, thereby allowing the number of oscillations of the oscillating shaft to be set as desired.

Preferably, the rotational speed of the pulley fitted on the outer periphery of the end portion of the eccentric collar is changed directly by changing the rotational speed of the motor for rotating the eccentric collar, thereby allowing the number of oscillations of the oscillating shaft to be set as desired.

Preferably, the rotating shaft and the oscillating shaft are provided at the distal ends thereof with attachments capable of attaching various grinding or polishing tools to the shafts, so that the tools can be attached and detached as desired.

Preferably, the grinding or polishing surface of one of various abrasive materials held by the attachment of the oscillating shaft produces a combined action of rotation and small eccentric rotational motion with respect to the surface of an object to be ground or polished, thereby grinding or polishing the object.

Still other objects and advantages of the invention will in part be obvious and will in part be apparent from the specification.

The invention accordingly comprises the features of construction, combinations of elements, and arrangement of parts which will be exemplified in the construction hereinafter set forth, and the scope of the invention will be indicated in the claims.
Fig. 1 is a diagram showing the external appearance of an oscillating electric lathe for prosthodontics according to the present invention.
Fig. 2 is a vertical sectional view as seen in the direction of the arrow X-X in part (b) of Fig. 1, which is a sectional view of a part containing an oscillator housing, a rotator housing, an oscillating shaft and a rotating shaft.
Fig. 3 is a right-hand side view of Fig. 2, which shows the relationship between a rotating pulley for oscillation and a belt.
Fig. 4 is a left-hand side view of Fig. 2, which shows the relationship between a shaft rotating pulley and a belt.
Fig. 5 is a diagram showing the external appearance of a joint.
Fig. 6 is a diagram showing the external appearance of a cross oscillating member.
Fig. 7 is an explanatory diagram showing the relationship among the rotating shaft, a rotation-side joint, an oscillating member, an oscillation-side joint and the oscillating shaft.
Fig. 8 is an enlarged sectional view as seen in the direction of the arrow A-A in Fig. 2, showing the motion of the oscillating shaft.
Fig. 9 is an enlarged sectional view showing the way in which the oscillating shaft oscillates.

An embodiment of the present invention will be described below with reference to the accompanying drawings showing an example.

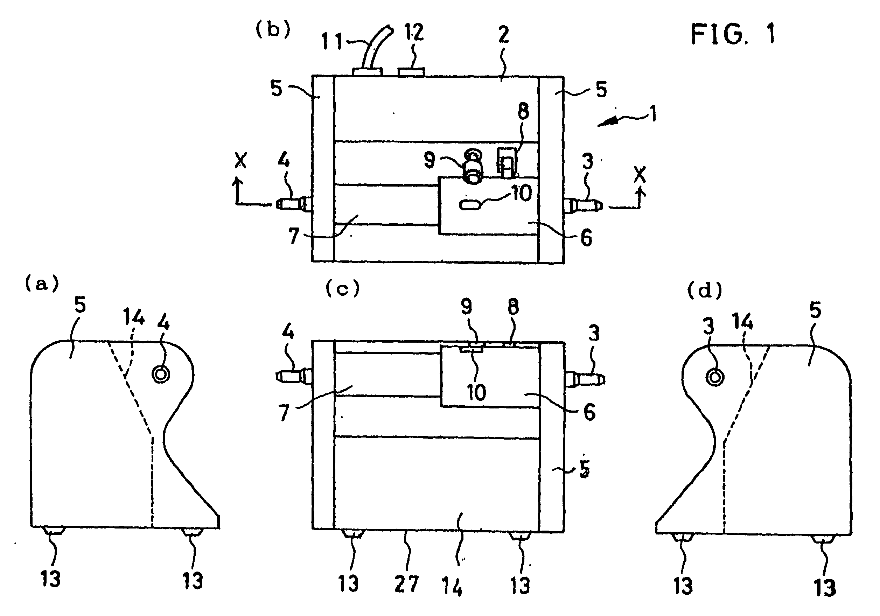

Fig. 1 is a diagram showing the external appearance of an oscillating electric lathe for prosthodontics according to the present invention, in which: part (a) is a left-hand side view; part (b) is a plan view; part (c) is a front view; and part (d) is a right-hand side view.

In the figure: reference numeral 1 denotes an oscillating lathe body; 2 denotes an enclosure top; 3 denotes an oscillating shaft; 4 denotes a rotating shaft; 5 denotes side plates; 6 denotes an oscillator housing; 7 denotes a rotator housing; 8 denotes a power switch; 9 denotes a rotational speed control knob; 10 denotes an oscillator housing window; 11 denotes a power supply cord; 12 denotes a fuse; 13 denotes enclosure supporting feet; and 14 denotes an enclosure partitioning plate.

It should be noted that in the case of an abrasive material, e.g. a grindstone, a buff for polishing, or a brush, in general, a volute fitting member having a spiral shape with a taper of about 1/50 is set on an attachment (oscillating shaft-side chuck 16) mounted on the oscillating shaft 3, and a grindstone, a buff, a brush, etc. is fitted to the volute fitting member. Alternatively, a polishing tool with a shank may be used by employing a fitting chuck in place of the volute fitting member.

The oscillating electric lathe for prosthodontics shown in this embodiment is an example of a transportable type that uses a single motor as a rotatively driving source for both the rotating shaft and the oscillating shaft.

As illustrated in the figure, the oscillating lathe body 1 is connected to a commercial power supply system through the power supply cord 11, and the motor 36 is rotated or stopped by turning on or off the power switch 8. The rotational speed control knob 9 is a knob for varying the number of revolutions of the motor 36 in stepless speed variation fashion from zero to the maximum, which is connected to a control unit (not shown).

It should be noted that as the motor 36 a DC motor is used, the rated torque of which is 2 kg/cm, and the rated speed of which is 0 to 10,000 rpm.

Although in the figure the oscillator housing 6 and the rotator housing 7 are exposed at the upper side, these housings, exclusive of the operation control part, may be integrally covered.

Next, the structure and operation of the oscillating electric lathe according to the present invention will be described.

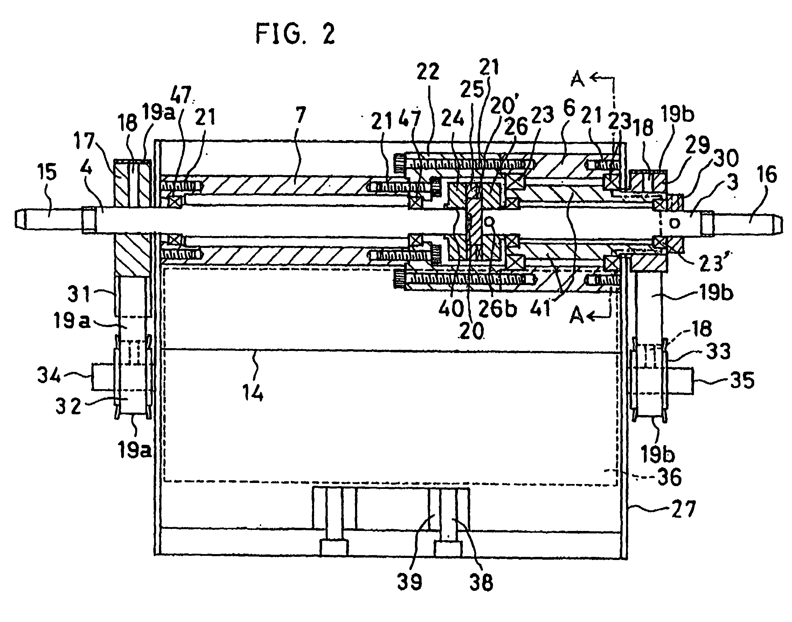

Fig. 2 is a vertical sectional view as seen in the direction of the arrow X-X in part (b) of Fig. 1, and it is a sectional view of a part containing the oscillator housing, the rotator housing, the oscillating shaft and the rotating shaft. It should be noted that the figure shows the structure with the side plates 5 removed therefrom.

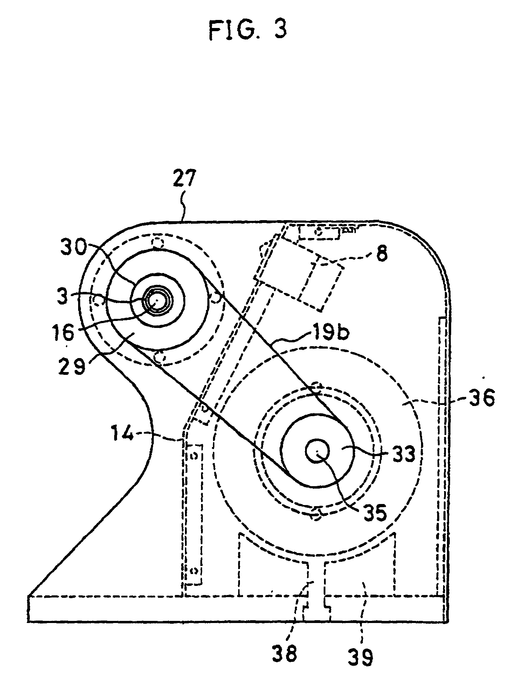

Fig. 3 is a detail view of the right-hand side of Fig. 2, which shows the relationship between a rotating pulley for oscillation and a belt.

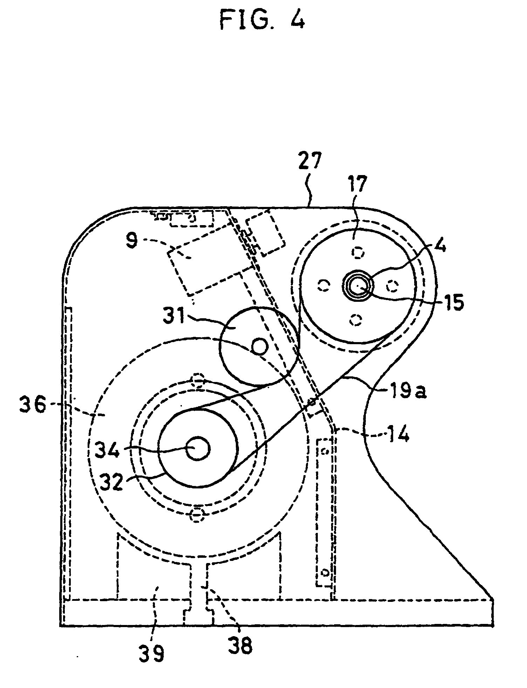

Fig. 4 is a detail view of the left-hand side of Fig. 2, which shows the relationship between a shaft rotating pulley and a belt.

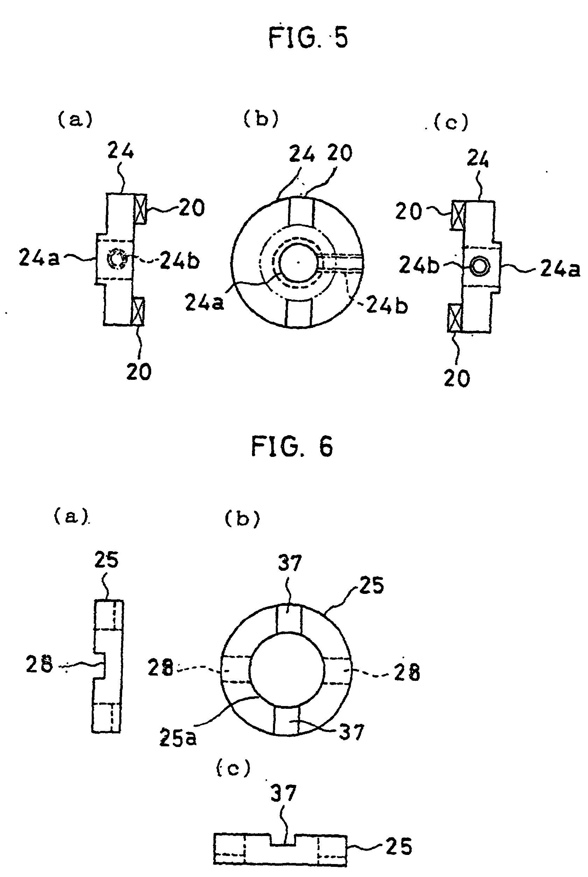

Fig. 5 is a diagram showing the external appearance of a joint.

Fig. 6 is a diagram showing the external appearance of a cross oscillating member.

In the figures: reference numeral 15 denotes a rotating shaft-side chuck; 16 denotes an oscillating shaft-side chuck; 17 denotes a rotating pulley; 18 denotes pulley set screws; 19a denotes a belt; 19b denotes an oscillation-side belt; 20 denotes a projection of a joint; 20' denotes a projection of a symmetric joint; 21 denotes set screws; 22 denotes an oscillating bracket; 23 denotes bearings for the eccentric collar outer periphery; 23' denotes bearings for the eccentric collar inner periphery; 24 denotes a joint; 24a denotes a shaft receiving hole of the joint; 24b denotes a shaft set screw; 25 denotes a cross oscillating member; 26 denotes a symmetric joint; 27 denotes an enclosure; 28 denotes A-side recesses of the cross oscillating member; 29 denotes an oscillation-side pulley; 30 denotes a fixed collar; 31 denotes a roller; 32 denotes a rotating pulley; 33 denotes a rotating pulley of a motor for oscillation; 34 denotes a motor shaft; 35 denotes an oscillation-side motor shaft; 36 denotes a motor; 37 denotes B-side recesses of the cross oscillating member; 38 denotes a motor support; 39 denotes a support set screw; 40 denotes a D-cut portion; 41 denotes an eccentric collar; and 47 denotes bearings for the rotating shaft.

First, the power switch 8 is turned on, and the rotational speed control knob 9 is adjusted to a predetermined speed to rotate the motor 36 (Figs. 1 and 2).

As the motor 36 rotates, rotation generated in the motor shaft 34 is transmitted from the left-hand rotating pulley 32 in Fig. 2 to the rotating pulley 17, which is secured to the rotating shaft 4 by the set screw 18, by the belt 19a through the roller 31, causing the rotating shaft 4 to rotate (Fig. 4).

Next, the oscillating action of the oscillating shaft 3 will be described.

The oscillating shaft 3 in Fig. 3 is rotated by transmitting thereto the rotation of the rotating shaft 4 in Fig. 2 through the left-hand joint 24, the cross oscillating member 25 and the right-hand joint 26, which is symmetric with the joint 24.

A first action is as follows. The oscillating shaft 3 in this example has its axis displaced by 0.2 mm with respect to the rotating shaft 4. Accordingly, the oscillating shaft 3 rotates with its axis 0.2 mm displaced from the axis of the rotating shaft 3.

Further, rotation generated in the right-hand motor shaft 35 in Fig. 3 is transmitted from the right-hand rotating pulley 33 of the motor for oscillation to the oscillation-side pulley 29, which is secured to the eccentric collar 41 by the set screw 18, by the oscillation-side belt 19b, causing the eccentric collar 41 in Fig. 2 to rotate.

A second action is as follows. The eccentric collar 41 is rotatably supported by the oscillator housing 6, which has the same axis as that of the rotating shaft 4 and rotatably supports the eccentric collar 41, through a plurality of bearings 23 for the eccentric collar outer periphery and bearings 23' for the eccentric coblar inner periphery, which are provided between the oscillator housing 6 and the oscillating shaft 3, in such a manner that the inner periphery of the eccentric collar 41 is decentered.

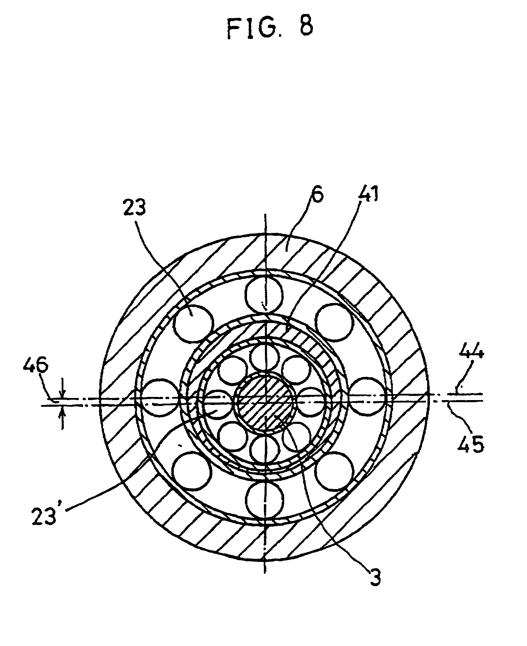

The diameter of the oscillation-side pulley 29 for rotating the eccentric collar 41 is smaller than the diameter of the rotating pulley 17. Therefore, the number of revolutions of the eccentric collar 41 is larger than the number of revolutions of the oscillating shaft 3. Thus, the diameter of the oscillation-side pulley 29 is set so that the eccentric collar 41 rotates at a higher speed than the oscillating shaft 3. Accordingly, the oscillating shaft 3, which is in contact with the bearings 23' for the eccentric collar inner periphery at the inner periphery of the eccentric collar 41, oscillates up and down and also right and left (Fig. 8) in proportion to the difference between the number of revolutions of the oscillating shaft 3 and that of the eccentric collar 41 and to the eccentricity of the eccentric collar 41.

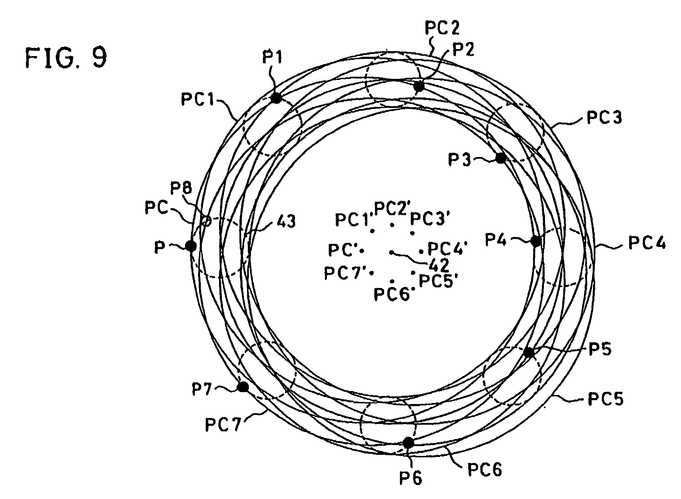

The motions produced by the above-described first and second actions are combined together. Accordingly, the cross-section of the oscillating shaft 3 rotates while oscillating, and an arbitrary point in the cross-section is given a small eccentric rotational motion equivalent to the eccentricity (Fig. 9).

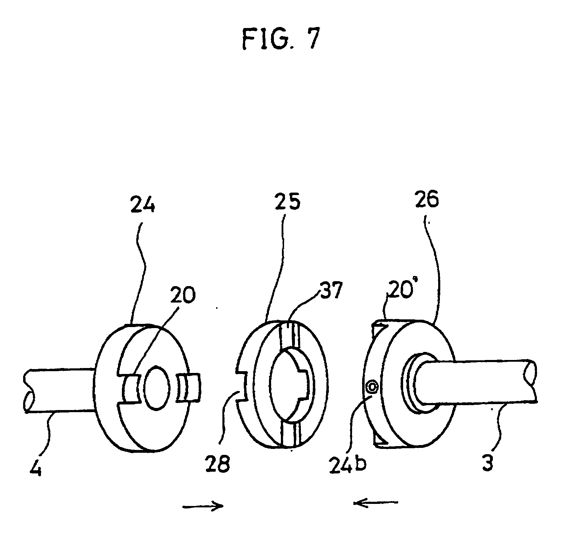

The above-described oscillation of the oscillating shaft 3 is enabled by sliding of the fitting sliding portions of the oscillation-side joint 26, the cross oscillating member 25 and the rotation-side joint 24, as shown in Fig. 2. Furthermore, the oscillation of the oscillating shaft 3 is absorbed at the joints so as not to be transmitted to the rotating shaft 4 (Fig. 7).

Fig. 5 is a diagram showing the external appearance of the joint 24, in which: part (a) is a left-hand side view of part (b); part (b) is a front view; and part (c) is a right-hand side view of part (b).

The rotation-side joint 24 shown in the above-described figure and the oscillation-side symmetric joint 26 are shaped (Fig. 7) so as to fit to and slide on the cross oscillating member 25 (Fig. 6).

As shown in Fig. 5, the joint 24 in this example is in the shape of a disc and has inverted U-shaped projections 20 with a predetermined width that extend in the diametrical direction. In addition, the joint 24 has a shaft receiving hole 24a in the center thereof to secure the rotating shaft 4 and further has a shaft set screw 24b to hold the shaft 4.

Regarding the relationship between the rotation-side joint 24 and the oscillation-side joint 26 (Fig. 2), as illustrated in Fig. 7, the rotation-side joint 24 and the symmetric oscillation-side joint 26 are displaced 90 degrees with respect to each other, and in this state, the rotating shaft 4 and the oscillating shaft 3 are secured to the joints 24 and 26, respectively.

Fig. 6 is a diagram showing the external appearance of the cross oscillating member 25, in which part (a) is a left-hand side view of part (b); part (b) is a front view; and part (c) is a bottom view of part (b).

As illustrated in the figure, the cross oscillating member 25 is a cross-shaped disc having B-side recesses 37 provided diametrically on the obverse side thereof and A-side recesses 28 provided diametrically on the reverse side thereof. The recesses 37 and 28 are U-shaped grooves each having a predetermined width corresponding to the above-described joints and provided at respective positions 90 separate from each other. In addition, a circular hole 25a is provided in the center of the cross oscillating member 25. The cross oscillating member 25 is positioned between the rotation-side joint 24 and the oscillation-side joint 26 and allows these joints to fit to and slide on the obverse and reverse sides of the cross oscillating member 25. The details of the action of the cross oscillating member 25 will be described below with reference to Fig. 7.

Fig. 7 is an explanatory diagram (outside perspective view) showing the relationship among the rotating shaft, the rotation-side joint, the oscillating member, the oscillation-side joint and the oscillating shaft.

As illustrated in the figure, the rotating shaft 4 has the joint 24 secured to the proximal end thereof. The oscillating shaft 3 has the oscillation-side joint 26 secured thereto. The oscillation-side joint 26, which is symmetrical with the joint 24, is displaced 90 degrees with respect to the joint 24. The cross oscillating member 25 is positioned between the rotation-side joint 24 and the symmetric oscillation-side joint 26 and has U-shaped grooves (A-side recesses 28 and B-side recesses 37) with a predetermined width respectively corresponding to the inverted U-shaped projections 20 of the joint 24 and the inverted U-shaped projections 20' of the symmetric oscillation-side joint 26. The U-shaped grooves are provided diametrically on the obverse and reverse sides of the disc-shaped cross oscillating member 25 at respective positions 90 degrees separate from each other to allow the two joints 24 and 26 to fit to and slide on the obverse and reverse sides of the cross oscillating member 25.

There is provided a slight clearance in the above-described fitting between the projections and the recesses so that the joints are slidable in the X- and Y-directions. Thus, the power of the rotating shaft 4 is transmitted to the oscillating shaft 3, and at the same time, the oscillation of the oscillating shaft 3 is absorbed by sliding in the X- and Y-directions so as not to be transmitted to the rotating shaft 4.

Next, the action of the oscillating shaft 3 will be described in detail with reference to the drawings.

Fig. 8 is an enlarged sectional view as seen in the direction of the arrow A-A in Fig. 2, showing the motion of the oscillating shaft 3. It should be noted that the set screws 21 are omitted.

In the figure: reference numeral 44 denotes the center line of the rotating shaft section; 45 denotes the center line of the oscillating shaft section; and 46 denotes the eccentricity.

As illustrated in the figure, the oscillating shaft 3 is disposed in series to the rotating shaft 4 (Fig. 2) in such a manner that the center line 45 of the oscillating shaft section is displaced with respect to the axis of the center line 44 of the rotating shaft section by the eccentricity 46. In addition, the eccentric collar 41 is provided to rotatably support the oscillating shaft 3. The eccentric collar 41 has a wall thickness varied so that the axis of the inner periphery and the axis of the outer periphery are displaced with respect to each other. Furthermore, the oscillator housing 6 is provided around the outer periphery of the eccentric collar 41. The oscillator housing 6 has the same axis as that of the rotating shaft 4 and rotatably supports the eccentric collar 41.

The bearings 23 for the eccentric collar outer periphery are rotatably disposed between the oscillator housing 6 and the outer periphery of the eccentric collar 41, and the bearings 23' for the eccentric collar inner periphery are rotatably disposed between the inner periphery of the eccentric collar 41 and the oscillating shaft 3.

As has been described above, the diameter of the oscillation-side pulley 29 for rotating the eccentric collar 41 is smaller than the diameter of the rotating pulley 17. Therefore, the number of revolutions of the eccentric collar 41 is larger than the number of revolutions of the oscillating shaft 3. Consequently, the eccentric collar 41 rotates at a higher speed than the oscillating shaft 3 (Fig. 2). Accordingly, the oscillating shaft 3, which is in contact with the inner periphery of the eccentric collar 41 through the bearings 23' for the eccentric collar inner periphery, rotates and, at the same time, oscillates up and down and also right and left (Fig. 8) in accordance with the difference between the numbers of revolutions and the eccentricity.

Next, the way in which the above-described oscillating shaft 3 oscillates will be described in detail with reference to the drawings.

Fig. 9 is an enlarged sectional view showing the way in which the oscillating shaft 3 oscillates.

In the figure: reference numeral 42 denotes the virtual center of rotation of the oscillating shaft 3; P denotes an arbitrary point in the oscillating shaft section; 43 denotes the locus of point P during oscillation (P1 to P8); PC, PC1 to PC7 denote the loci of the circle of oscillation; and PC', PC1' to PC7' each denote the center of the circle of oscillation.

Assuming that the center of oscillation has moved rightward through 45 degrees at a time as illustrated in the figure, a point P in the oscillating shaft section lies at locus point P1 on the locus PC1 of the circle of oscillation. Similarly, points P2 to P8 oscillate, describing respective loci as shown in the figure.

Therefore, if the ratio of the number of revolutions of the eccentric collar to that of the rotating shaft is N, for example, the crosswise motion in the vertical and horizontal directions is performed N times per revolution of the rotating shaft. Accordingly, as the value of N is increased, the momentum of oscillation becomes greater. Consequently, the arrangement becomes even more effective.

It should be noted that the above-described N in Fig. 9 is 1.26.

In this embodiment, a single motor is used, and the rotational speed of the motor for rotating the eccentric collar is changed by replacing the oscillation-side rotating pulley, which is fitted on the outer periphery of the end portion of the eccentric collar, with a pulley for rotation with a larger or smaller diameter, thereby allowing the number of oscillations of the oscillating shaft to be set as desired. Thus, the main body is made compact so as to be transportable.

Alternatively, a plurality of motors each having a rotating shaft projecting therefrom may be used as driving sources for the rotating shaft and the oscillating shaft. That is, the apparatus has a rotating shaft driving part comprising a pulley for rotation fitted on the shaft of one motor, the above-described rotating pulley, and a belt stretched between the pulleys through a roller, and an eccentric collar driving part comprising a pulley for rotation fitted on the shaft of another motor, an oscillation-side rotating pulley for rotating the eccentric collar, which is fitted on the outer periphery of the end portion of the eccentric collar rotatably supporting the above-described oscillating shaft, and a belt stretched between the pulleys.

In this case, the number of revolutions of the rotating shaft and the number of oscillations of the oscillating shaft can be set independently of each other so as to be in a desired ratio. Therefore, setting is easy, and the range of uses can be enlarged.

As has been described above, if the oscillating shaft 3 is used to polish an object to be polished, for example, by fitting a fitting chuck on the distal end portion thereof and setting a grindstone for polishing in the chuck, the grindstone performs the above-described rotation and oscillation. Accordingly, polishing is carried out in such a manner that portions of the object that come in contact with the polishing surface change constantly. Thus, the object can be uniformly polished as far as small parts thereof.

Moreover, a phenomenon in which the object being polished is undesirably pulled in will not occur, and loading of the grindstone is reduced. In addition, the amount of heat generated by polishing is favorably small.

In addition, the rotating shaft and the oscillating shaft are provided at their distal ends with attachments capable of attaching tools fitted with various grinding or polishing materials, so that various tools can be attached and detached as desired. Therefore, it is possible to readily select grinding or polishing materials suitable for various prosthodontic operations.

The present invention provides the following advantageous effects.

According to the present invention, the oscillating electric lathe has a rotating shaft provided on one side, which has a fixed axis, and an oscillating shaft provided on the other side, which has a combined action of rotation and oscillation produced by changing the speed ratio of an eccentric collar. The rotating shaft is useful when a drilling tool or the like is used because the center of rotation is fixed. The oscillating shaft rotates while oscillating, and an arbitrary point in the oscillating shaft section is given a small eccentric rotational motion based on the difference between the number of revolutions of the eccentric collar and the number of revolutions of the oscillating shaft. The combined action provides excellent grinding and polishing effects in comparison to the prior art. In addition, the structure is simple, and the manufacture and the worker's operation are easy.

In one embodiment of present invention, the driving source of the rotatively driving part has a single motor, and the number of oscillations can be set by varying the rotational speed of the eccentric collar. Therefore, the mechanism is simple, and the main body can be made compact so as to be transportable.

In another embodiment of the present invention, the driving source of the rotatively driving part has a plurality of motors. One motor is provided for the rotating shaft, and another motor is provided for rotating the eccentric collar. Therefore, the number of oscillations can be set easily.

The rotational speed of the motor for rotating the eccentric collar is changed by replacing the pulley for rotation fitted on the outer periphery of the end portion of the eccentric collar with a pulley with a larger or smaller diameter, thereby allowing the number of oscillations of the oscillating shaft to be set as desired. Therefore, the mechanism is simple.

The number of revolutions of the rotating shaft and the number of oscillations of the oscillating shaft can be set independently of each other so as to be in a desired ratio. Therefore, setting is easy, and the range of uses can be enlarged.

The rotating shaft and the oscillating shaft are provided at their distal ends with attachments capable of attaching various drilling tools and tools fitted with grinding or polishing materials, so that these tools can be attached and detached as desired. Therefore, it is easy to select abrasive materials for use in prosthodontics, and the operation is facilitated.

The grinding or polishing surface of one of various abrasive materials held by the above-described attachment of the oscillating shaft produces a combined action of oscillatory rotation and small eccentric rotational motion with respect to the surface of an object to be ground or polished, and in this way, the object is polished or ground. Therefore, in electric lathes for grinding or polishing resins or various metal prostheses, it is possible to obtain an oscillating electric lathe wherein loading of the abrasive material is reduced, and which is capable of uniformly finishing an object to be polished as far as small parts thereof, wherein the object being polished is unlikely to be pulled in, and the amount of heat generated during polishing is reduced. Accordingly, the efficiency of the operation can be improved. In addition, it is possible to ensure the safety in operations and to improve the degree of completion of polishing carried out on the object to be polished. Thus, the present invention provides various advantageous effects.

## Claims

1. An electric lathe for grinding or polishing resins or various metal prostheses in prosthodontics, with
an oscillating electric lathe for prosthodontics comprising:
a rotating shaft provided on one side and an oscillating shaft (3) provided on the other side, said rotating shaft and said oscillating shaft being disposed in a straight line through coupling means;
said coupling means including:
said rotating shaft (4) having a disc-shaped rotation-side joint (24) secured to a proximal end thereof, said rotation-side joint (24) having an inverted U-shaped projection or a U-shaped groove which extends diametrically and has a predetermined width;
said oscillating shaft (3) having an oscillation-side joint (26) secured to a proximal end thereof, said oscillation-side joint (26) being symmetrical with said rotation-side joint (24) and displaced 90 degrees with respect to said rotation-side joint (24); and
a disc-shaped cross oscillating member (25) positioned. between said rotation-side joint (24) and oscillation-side joint (26) to fit to and slide on said two joints, said cross oscillating member (25) having U-shaped grooves or inverted U-shaped projections provided diametrically on the obverse and reverse sides thereof at respective positions 90 degrees separate from each other, said U-shaped grooves or inverted U-shaped projections each having a predetermined width corresponding to said inverted U-shaped projection or U-shaped groove of each of said joints;
said oscillating shaft (3) being decentered with respect to an axis of the rotating shaft (4);
said oscillating electric lathe further comprising:
an eccentric collar (41) for rotatably supporting said oscillating shaft (3), said eccentric collar (41) having a wall thickness varied so that an axis of an inner periphery and an axis of an outer periphery are displaced with respect to each other;
an oscillator housing (6) provided around the outer periphery of said eccentric collar (41), said oscillator housing (6) having the same axis as that of the rotating shaft (4) and rotatably supporting the eccentric collar (41);
a motor (36) for rotating said rotating shaft (4) and eccentric collar (41); and
a rotatively driving part for the rotating shaft (4) and the eccentric collar (41), said rotatively driving part being capable of adjusting a number of revolutions of said motor.

2. An oscillating electric lathe for prosthodontics according to claim 1, wherein said rotatively driving part for the rotating shaft and the eccentric collar has a single motor as a driving source, said motor having shafts projecting therefrom rightward and leftward, said rotatively driving part including:
a rotating shaft driving part having a pulley (32) for rotation fitted on one of the shafts of said motor (36) and a rotating shaft rotating pulley (17) secured to said rotating shaft (4), said rotating shaft driving part further having a belt (19a) stretched between said pulleys through a roller (31); and
an eccentric collar driving part having a pulley (33) for rotation fitted on the other shaft of said motor (36) and an eccentric collar rotating pulley (29) fitted on an outer periphery of an end portion of the eccentric collar (41) rotatably supporting said oscillating shaft (3), said eccentric collar rotating pulley (29) having a smaller diameter than that of said rotating shaft rotating pulley (17), said eccentric collar driving part further having a belt (19b) stretched between said pulleys.

3. An oscillating electric lathe for prosthodontics according to claim 1, wherein said rotatively driving part for the rotating shaft (4) and the eccentric collar (41) has a plurality of motors as driving sources, said motors having shafts projecting therefrom, said rotatively driving part including:
a rotating shaft driving part having a pulley for rotation fitted on the shaft of one of said motors and a rotating shaft rotating pulley secured to said rotating shaft, said rotating shaft driving part further having a belt stretched between said pulleys through a roller; and
an eccentric collar driving part having a pulley for rotation fitted on the shaft of another of said motors, and an eccentric collar rotating pulley fitted on an outer periphery of an end portion of the eccentric collar rotatably supporting said oscillating shaft, said eccentric collar driving part further having a belt stretched between said pulleys.

4. An oscillating electric lathe for prosthodontics according to one of claims 1 to 3, wherein a rotational speed of the motor for rotating the eccentric collar is changed by replacing said pulley fitted on the outer periphery of the end portion of the eccentric collar with a pulley for rotation with a larger or smaller diameter, thereby allowing a number of oscillations of the oscillating shaft to be set as desired.

5. An oscillating electric lathe for prosthodontics according to claim 3, wherein a rotational speed of said pulley fitted on the outer periphery of the end portion of the eccentric collar is changed directly by changing a rotational speed of the motor for rotating the eccentric collar, thereby allowing a number of oscillations of the oscillating shaft to be set as desired.

6. An oscillating electric lathe for prosthodontics according to one of claims 1 to 5, wherein the rotating shaft (4) and the oscillating shaft (3) are provided at the distal ends thereof with attachments (15, 16) capable of attaching various grinding or polishing tools to the shafts, so that the tools can be attached and detached as desired.

7. An oscillating electric lathe for prosthodontics according to one of claims 1 to 6, wherein a grinding or polishing surface of one of various abrasive materials held by said attachment of the oscillating shaft produces a combined action of rotation and small eccentric rotational motion with respect to a surface of an object to be ground or polished, thereby grinding or polishing the object.

## Patentansprüche

1. Elektrische Maschine zum Schleifen oder Polieren von Harzen oder verschiedenen Metallprothesen in der Zahnprothetik mit
einer elektrischen Schwingmaschine für die Zahnprothetik, die aufweist:
eine auf einer Seite vorgesehene Drehwelle (4) und eine auf der anderen Seite vorgesehene Schwingwelle (3), wobei die Drehwelle und die Schwingwelle über eine Kupplungseinrichtung auf einer Geraden angeordnet sind;
wobei die Kupplungseinrichtung aufweist:
die Drehwelle (4) mit einem scheibenförmigen drehseitigen Verbindungsteil (24), das an einem proximalen Ende von ihr befestigt ist, wobei das drehseitige Verbindungsteil (24) eine umgekehrt U-förmige Auskragung oder eine U-förmige Nut hat, die sich diametral erstreckt und eine vorbestimmte Breite hat;
die Schwingwelle (3) mit einem schwingseitigen Verbindungsteil (26), das an einem proximalen Ende von ihr befestigt ist, wobei das schwingseitige Verbindungsteil (26) symmetrisch zum drehseitigen Verbindungsteil (24) und um 90 Grad gegenüber dem drehseitigen Verbindungsteil (24) verschoben ist; und
ein scheibenförmiges Kreuzschwingelement (25), das zwischen dem drehseitigen Verbindungsteil (24) und schwingseitigen Verbindungsteil (26) so positioniert ist, daß es sich an die beiden Verbindungsteile anpaßt und an ihnen gleitet, wobei das Kreuzschwingelement (25) U-förmige Nuten oder umgekehrt U-förmige Auskragungen hat, die auf seiner Vorder- und Rückseite an jeweiligen Positionen diametral vorgesehen sind, die um 90 Grad voneinander getrennt sind, wobei die U-förmigen Nuten oder umgekehrt U-förmigen Auskragungen jeweils
eine vorbestimmte Breite entsprechend zur umgekehrt U-förmigen Auskragung oder U-förmigen Nut jedes der Verbindungselemente haben;
wobei die Schwingwelle (3) gegenüber einer Achse der Drehwelle (4) dezentriert ist;
wobei die elektrische Schwingmaschine ferner aufweist:
einen Exzenterbund (41) zum drehbaren Abstützen der Schwingwelle (3), wobei der Exzenterbund (41) eine Wanddicke hat, die so variiert, daß eine Achse eines Innenumfangs und eine Achse eines Außenumfangs zueinander verschoben sind;
ein Schwingergehäuse (6), das um den Außenumfang des Exzenterbunds (41) vorgesehen ist, wobei das Schwingergehäuse (6) dieselbe Achse wie die Drehwelle (4) hat und den Exzenterbund (41) drehbar abstützt;
einen Motor (36) zum Drehen der Drehwelle (4) und des Exzenterbunds (41); und
ein Drehantriebsteil für die Drehwelle (4) und den Exzenterbund (41), wobei das Drehantriebsteil eine Umdrehungszahl des Motors einstellen kann.

2. Elektrische Schwingmaschine für die Zahnprothetik nach Anspruch 1, wobei das Drehantriebsteil für die Drehwelle und den Exzenterbund einen einzelnen Motor als Antriebsquelle hat, wobei der Motor Wellen hat, die von ihm nach rechts und links vorstehen, wobei das Drehantriebsteil aufweist:
ein Drehwellen-Antriebsteil mit einer Riemenscheibe (32) zur Drehung, die auf eine der Wellen des Motors (36) aufgepaßt ist, und einer Drehwellen-Drehriemenscheibe (17), die an der Drehwelle (4) befestigt ist,
wobei das Drehwellen-Antriebsteil ferner einen Riemen (19a) hat, der zwischen den Riemenscheiben über eine Rolle (31) gespannt ist; und
ein Exzenterbund-Antriebsteil mit einer Riemenscheibe (33) zur Drehung, die auf die andere Welle des Motors (36) aufgepaßt ist, und einer Exzenterbund-Drehriemenscheibe (29), die auf einen Außenumfang eines Endabschnitts des Exzenterbunds (41) aufgepaßt ist, der die Schwingwelle (3) drehbar abstützt, wobei die Exzenterbund-Drehriemenscheibe (29) einen kleineren Durchmesser als die Drehwellen-Drehriemenscheibe (17) hat, wobei das Exzenterbund-Antriebsteil ferner einen Riemen (19b) hat, der zwischen den Riemenscheiben gespannt ist.

3. Elektrische Schwingmaschine für die Zahnprothetik nach Anspruch 1, wobei das Drehantriebsteil für die Drehwelle (4) und den Exzenterbund (41) mehrere Motoren als Antriebsquellen hat, wobei die Motoren von ihnen vorstehende Wellen haben, wobei das Drehantriebsteil aufweist:
ein Drehwellen-Antriebsteil mit einer Riemenscheibe zur Drehung, die auf die Welle eines der Motoren aufgepaßt ist, und einer Drehwellen-Drehriemenscheibe, die an der Drehwelle befestigt ist, wobei das Drehwellen-Antriebsteil ferner einen Riemen hat, der zwischen den Riemenscheiben über eine Rolle gespannt ist; und
ein Exzenterbund-Antriebsteil mit einer Riemenscheibe zur Drehung, die auf die Welle eines weiteren der Motoren aufgepaßt ist, und einer Exzenterbund-Drehriemenscheibe, die auf einen Außenumfang eines Endabschnitts des Exzenterbunds aufgepaßt ist, der die Schwingwelle drehbar abstützt, wobei das Exzenterbund-Antriebsteil ferner einen Riemen hat, der zwischen den Riemenscheiben gespannt ist.

4. Elektrische Schwingmaschine für die Zahnprothetik nach einem der Ansprüche 1 bis 3, wobei eine Drehzahl des Motors zum Drehen des Exzenterbunds geändert wird, indem die auf den Außenumfang des Endabschnitts des Exzenterbunds aufgepaßte Riemenscheibe durch eine Riemenscheibe zur Drehung mit einem größeren oder kleineren Durchmesser ersetzt wird, wodurch eine Schwingungsfrequenz der Schwingwelle bedarfsgemäß eingestellt werden kann.

5. Elektrische Schwingmaschine für die Zahnprothetik nach Anspruch 3, wobei eine Drehzahl der auf den Außenumfang des Endabschnitts des Exzenterbunds aufgepaßten Riemenscheibe direkt geändert wird, indem eine Drehzahl des Motors zum Drehen des Exzenterbunds geändert wird, wodurch die Schwingungsfrequenz der Schwingwelle bedarfsgemäß eingestellt werden kann.

6. Elektrische Schwingmaschine für die Zahnprothetik nach einem der Ansprüche 1 bis 5, wobei die Drehwelle (4) und die Schwingwelle (3) an ihren distalen Enden mit Halterungen (15, 16) versehen sind, an denen verschiedene Schleif- oder Polierwerkzeuge an den Wellen angebracht werden können, so daß die Werkzeuge bedarfsgemäß angebracht und abgenommen werden können.

7. Elektrische Schwingmaschine für die Zahnprothetik nach einem der Ansprüche 1 bis 6, wobei eine Schleif- oder Polierfläche eines von verschiedenen Schleifmitteln, das durch die Halterung der Schwingwelle gehalten wird, eine kombinierte Wirkung aus Drehung und kleiner exzentrischer Drehbewegung relativ zu einer Oberfläche eines zu schleifenden oder polierenden Gegenstands erzeugt, wodurch der Gegenstand geschliffen oder poliert wird.

## Revendications

1. Tour électrique pour meuler ou polir des résines ou diverses prothèses métalliques en prosthodontie, avec
un tour électrique oscillant utilisé en prosthodontie comprenant :
un arbre rotatif (4) prévu sur un côté et un arbre oscillant (3) prévu sur l'autre côté, ledit arbre rotatif et ledit arbre oscillant étant disposés en ligne droite par des moyens de couplage,
lesdits moyens de couplage incluant :
ledit arbre rotatif (4) ayant une articulation (24) en forme de disque du côté rotation qui est fixée à une extrémité proximale de celui-ci, ladite articulation (24) du côté rotation ayant une saillie inversée en forme de U ou une rainure en forme de U qui s'étend diamétralement et a une largeur prédéterminée,
ledit arbre oscillant (3) ayant une articulation (26) du côté oscillation qui est fixée à une extrémité proximale de celui-ci, ladite articulation (26) du côté oscillation étant symétrique par rapport à ladite articulation (24) du côté rotation et étant déplacée de 90 degrés par rapport à ladite articulation (24) du côté rotation, et
un membre (25) en forme de disque oscillant transversalement, positionné entre ladite articulation (24) du côté rotation et ladite articulation (26) du côté oscillation pour s'emboîter et glisser sur lesdites deux articulations, ledit membre (25) oscillant transversalement ayant des rainures en forme de U ou des saillies inversées en forme de U prévues diamétralement sur les côtés recto et verso de celui-ci dans des positions respectives séparées de 90 degrés l'une de l'autre, lesdites rainures en forme de U ou les saillies inversées en forme de U ayant chacune une largeur prédéterminée correspondant à ladite saillie inversée en forme de U ou rainure en forme de U de chacune desdites articulations,
ledit arbre oscillant (3) étant décentré par rapport à un axe de l'arbre rotatif (4),
ledit tour électrique comprenant en outre :
un collet excentrique (41) pour supporter de manière rotative ledit arbre oscillant (3), ledit collet excentrique (41) ayant une épaisseur de paroi variée afin qu'un axe d'une périphérie intérieure et un axe d'une périphérie extérieure soient déplacés l'un par rapport à l'autre,
un logement oscillant (6) prévu autour de la périphérie extérieure dudit collet excentrique (41), ledit logement oscillant (6) ayant le même axe que celui de l'arbre rotatif (4) et supportant de manière rotative le collet excentrique (41),
un moteur (36) pour mettre en rotation lesdits arbre rotatif (4) et collet excentrique (41), et
un organe d'entraînement rotatif pour l'arbre rotatif (4) et le collet excentrique (41), ledit organe d'entraînement rotatif étant capable d'ajuster un nombre de révolutions dudit moteur.

2. Tour électrique oscillant utilisé en prosthodontie selon la revendication 1, dans lequel ledit organe d'entraînement rotatif pour l'arbre rotatif et le collet excentrique a un moteur unique comme source motrice, ledit moteur ayant des arbres faisant saillie de celui-ci vers la droite et vers la gauche, ledit organe d'entraînement rotatif incluant :
un organe entraînant l'arbre rotatif, qui a une poulie (32) pour la rotation fixée sur un des arbres dudit moteur (36) et une poulie (17) faisant tourner l'arbre rotatif arrimée audit arbre rotatif (4), ledit organe entraînant l'arbre rotatif ayant en outre une courroie (19a) tendue entre lesdites poulies par l'intermédiaire d'un rouleau (31), et
un organe entraînant le collet excentrique qui a une poulie (33) pour la rotation fixée sur l'autre arbre dudit moteur (36) et une poulie (29) faisant tourner le collet excentrique fixée sur une périphérie extérieure d'une partie extrême du collet excentrique (41) supportant de manière rotative ledit arbre oscillant (3), ladite poulie (29) faisant tourner le collet excentrique ayant un diamètre plus petit que celui de ladite poulie (17) faisant tourner l'arbre rotatif, ledit organe entraînant le collet excentrique ayant en outre une courroie (19b) tendue entre lesdites poulies.

3. Tour électrique oscillant utilisé en prosthodontie selon la revendication 1, dans lequel ledit organe d'entraînement rotatif pour l'arbre rotatif (4) et le collet excentrique (41) a une pluralité de moteurs comme sources motrices, lesdits moteurs ayant des arbres faisant saillies de ceux-ci, ledit organe d'entraînement rotatif incluant :
un organe entraînant l'arbre rotatif, qui a une poulie pour la rotation fixée sur l'arbre d'un desdits moteurs et une poulie faisant tourner l'arbre rotatif arrimée audit arbre rotatif, l'organe entraînant l'arbre rotatif ayant en outre une courroie tendue entre lesdites poulies par l'intermédiaire d'un rouleau, et
un organe entraînant le collet excentrique qui a une poulie pour la rotation fixée sur l'arbre d'un autre desdits moteurs et une poulie faisant tourner le collet excentrique fixée sur une périphérie extérieure d'une partie extrême du collet excentrique supportant de manière rotative ledit arbre oscillant, ledit organe entraînant le collet excentrique ayant une courroie tendue entre lesdites poulies.

4. Tour électrique oscillant utilisé en prosthodontie selon une des revendications 1 à 3, dans lequel une vitesse de rotation du moteur pour faire tourner le collet excentrique est modifiée en remplaçant ladite poulie fixée sur la périphérie extérieure de la partie extrême du collet excentrique par une poulie pour la rotation ayant un diamètre plus grand ou plus petit, permettant ainsi de fixer comme on le désire un nombre d'oscillations de l'arbre oscillant.

5. Tour électrique oscillant utilisé en prosthodontie selon la revendication 3, dans lequel une vitesse de rotation de ladite poulie fixée sur la périphérie extérieure de la partie extrême du collet excentrique est modifiée directement en changeant une vitesse de rotation du moteur pour faire tourner le collet excentrique, permettant ainsi de fixer comme on le désire un nombre d'oscillations de l'arbre oscillant.

6. Tour électrique oscillant utilisé en prosthodontie selon une des revendications 1 à 5, dans lequel l'arbre rotatif (4) et l'arbre oscillant (3) sont pourvus à leurs extrémités distales d'attaches (15, 16) capables d'attacher divers outils de meulage ou de polissage aux arbres, afin les outils puissent être attachés et détachés comme on le désire.

7. Tour électrique oscillant utilisé en prosthodontie selon une des revendications 1 à 6; dans lequel une surface de meulage ou de polissage d'un parmi plusieurs matériaux abrasifs retenus par ladite attache de l'arbre oscillant produit une action combinée de rotation et de petits mouvements rotatifs excentriques par rapport à une surface d'un objet à meuler ou polir, meulant ou polissant ainsi l'objet.
